# EUROPEAN PATENT APPLICATION

(11) **EP 2 587 859 A1**
(43) Date of publication of application: **01.05.2013**
(21) Application number: 11306405.9
(22) Date of filing: 31.10.2011
(51) Int. Cl.: H04W 28/02

(54) **Apparatus, method and computer program for signaling radio resource congestion information**

(71) Applicant: Alcatel Lucent, 75007 Paris (FR)
(72) Inventor: Worrall, Chandrika, Newbury, Berkshire RG14 6SN (GB); Palat, Sudeep, Swindon SN5 6EE (GB)
(74) Representative: 2SPL Patentanwälte

(57) **Abstract**

Embodiments provide a concept for signaling radio resource congestion information in a communication system (100), wherein the communication system (100) has associated thereto a limited set of radio resources for delivering multicast and unicast services to associated mobile transceivers (110). Embodiments comprise providing, from the communication system (100), radio resource congestion information (130) to at least one of the associated mobile transceivers (110), wherein the radio resource congestion information indicates that a number of radio resources left available for delivering unicast services to the at least one associated mobile transceiver (110) is below a radio resource congestion threshold.

## Description

Embodiments of the present invention relate to wireless communication, more particularly but not exclusively to provision of multicast and unicast services in a communication network.

### Background

Demands for higher data rates for mobile services are steadily increasing. At the same time modem mobile communication systems, as 3rd Generation systems (3G as abbreviation) and 4th Generation systems (4G as abbreviation), provide enhanced technologies, which enable higher spectral efficiencies and allow for higher data rates and cell capacities. Moreover, new services and service types are introduced.

Multicast services are utilized, for example, for provision of multimedia services as well as for video and TeleVision (TV) applications. One prominent multicast or broadcast service is the Multimedia Broadcast Multicast Service (MBMS), as standardized by the 3^{rd} Generation Partnership Project (3GPP). MBMS is a point-to-multipoint interface specification, which is designed to provide efficient delivery of broadcast and/or multicast services, both within a radio cell as well as within a core network of a mobile communication system. For broadcast transmission across multiple radio cells, it defines transmission via single-frequency network configurations, wherein several transmitters simultaneously send the same signal over the same frequency channel. Target applications include mobile TV and radio broadcasting, as well as file delivery and emergency alerts.

Broadcast services are services where transmitted data is readable by any destination. For example, all mobile terminals associated to the wireless network may access a broadcast service. Examples of broadcast services are services which do not require any registration and are available to all terminals, as, for example, the Global Positioning System (GPS).

In contrast, unicast services are services which foresee a transmission of data and messages towards a single destination, for example, a particular mobile terminal associated to the wireless communication system or network. Examples of unicast services are voice calls, emails, internet sessions, etc.

Multicast services are somewhere in between unicast and broadcast services. Here, only a limited group of destination terminals is addressed the same data and messages. Examples of multicast are TV streaming based on prior registration at a specific service provider.

In the context of the present specification the term "multicast" will be used for multicast services as well as broadcast services or combinations thereof. Hence, a multicast service may also be understood as a service which is cast or provided to multiple users of a communication system or their respective mobile terminals, as, for example, the Multimedia Broadcast Multicast Service (MBMS).

MBMS provisioning is designed for the Universal Mobile Telecommunications System (UMTS) and for the Long Term Evolution (LTE) system such that MBMS or multicast data traffic and unicast data traffic can be time multiplexed on the same frequency carrier, which is to be understood as a carrier or center frequency of a contiguous system frequency band, wherein a large number of closely spaced orthogonal sub-carriers may be used to carry data, for example.

For example, in a transmission structure of repetitive radio frames, MBMS/multicast data can be provided on some allocated or associated sub-frames or time slots while unicast service data can be scheduled on the remaining sub-frames or time slots of a radio frame. Unicast and broadcast/multicast services may each be associated with a bearer specifying the corresponding configuration and/or radio resource of the physical layer (PHY) and Layer 2 (L2) in order to fulfill certain quality of service requirements for the different services. The bearers are mapped onto physical carriers. One physical carrier may support several multiplexed bearers. For example, different bearers may be mapped on some disjoint sub-frames within a radio frame. For example, out of 10 sub-frames, subframes #0, #4, #5, #9 may be allocated to unicast services, while sub-frames #1, #2, #3, #6, #7, #8 are allocated to multicast services.

If MBMS is provided on a single frequency carrier, the network may provide unicast services on the same frequency carrier for the connected mobile terminals, also referred to as User Equipment (UEs), which are not capable of dual reception or intra-band or interband Carrier Aggregation (CA), wherein multiple component carriers are aggregated to form a larger overall transmission bandwidth. Given a large portion of sub-frame resources would need to be configured for all the MBMS services, resource limitation for unicast services may be experienced.

Possible resource limitation for unicast services on MBMS/multicast carrier should be minimized in the design of a communication system or network. One way to minimize the resource limitation for unicast would be to distribute a multicast load over multiple frequency carriers. For example, a highly popular multicast service could be provided on a frequency carrier, where only a few sub-frames are allocated for multicast and other multicast services can be provided on another frequency carrier. As large portion of the sub-frame resources is then made available for unicast service data, potential radio resource congestion on unicast traffic could be controlled.

### Summary

Embodiments of the present invention are based on the finding that even though the possible resource limitation to unicast services on a multicast frequency carrier may be minimized via network design, radio resource congestion due to multicast services, such as MBMS, may still occur. It is desirable, that if the radio resource congestion problem does occur, the communication network should be able to resolve the limitation with minimum disturbance to the user experience.

The communication network could either release some of Data Radio Bearers (DRBs) or release Radio Resource Control (RRC) connections as a way of controlling the congestion on a multicast frequency carrier, which comprises a predefined and limited set of radio resources that may be used for a communication between network components, like base stations and mobile terminals associated thereto. If only some DRBs are released a mobile terminal or UE may still be in RRC connected mode, wherein it has an established and maintains a RRC connection. That is to say, in RRC connected mode a mobile terminal may still maintain a dedicated or unicast connection to the network or base station, as, for example, a NodeB or an eNodeB. However, if the RRC connection is released the mobile terminal is transferred from RRC connected mode to RRC idle mode, wherein the mobile terminal has not established any RRC connection but may still be paged, for example.

In RRC connected mode, the DRB establishment is performed or controlled by the network and, hence, the network can control the DRB establishment during a radio resource congestion situation due to multicast on a multicast frequency carrier. Moreover, RRC connections are initiated by the mobile terminals in RRC idle modes.

Some embodiments of the present invention may be based on the finding that it may therefore be desirable to have a mechanism to prevent mobile terminals, which may be in RRC Idle mode, from establishing an RRC connection on a congested multicast frequency carrier, i.e. in a contiguous frequency band whose radio resource are congested by multicast services. Embodiments may therefore provide means for preventing mobile terminals in RRC Idle mode from establishing connections on congested mobile terminals radio resources, as, for example, spreading codes, frequency sub-carriers, time slots or a combination thereof.

Existing mechanisms for preventing/controlling mobile terminals in RRC Idle mode from establishing a connection on a congested cell, as e.g. "access class barring" and/or "wait time", may not consider the user's needs appropriately.

For example, when considering MBMS reception, a mobile terminal is allowed to make the decision to prioritize MBMS or multicast service over unicast service, i.e., the user may decide to watch a movie. However, the decision to prioritize MBMS over unicast services may change due to many reasons, such as the change of user interest on receiving a multicast service due the service itself or the service's quality, start of another multicast service on a different frequency, end of the multicast service, a need for originating a unicast call, or based on mobile terminating call, etc.

Conventional access control mechanisms do not take into account the relative priority of multicast and unicast as decided by the mobile terminal or its user. Hence, they do not take into account the users' actual needs or desires. Therefore it is desirable to allow a user to change his relative priorities during a congestion period, i.e. a time interval during which a number of radio resources being associated to multicast services of the communication system is above a system specific multicast congestion threshold.

For example, according to the use of "wait time", a mobile terminal is not allowed to originate or accept a UE terminated call during the specified wait time. Hence, if the mobile terminal user's interest has changed during the multicast congestion period the mobile terminal does not have a way of informing the network of its change of interest when the wait time is applied. If paging for a network terminating call is received, the mobile terminal will not be able to connect to the network to know the calling user's ID, hence, the mobile terminal will not have the opportunity to change its priority settings based on the importance of the calling party.

Therefore, embodiments may provide means for improving congestion control on multicast frequency carriers of a communication system.

According to different aspects of the present invention various apparatuses and methods related to different network components, respectively, are provided.

According to a first aspect it is provided an apparatus for a mobile transceiver of a communication system, wherein the communication system uses a limited set of radio resources for delivering both multicast and unicast services its associated mobile transceivers. The apparatus comprises means for receiving, from the communication system, radio resource congestion information indicating that a number of radio resources left available for delivering unicast services to the mobile transceiver is below a radio resource congestion threshold.

Hence, a mobile transceiver may be informed of a critical radio resource congestion situation in a communication system or a radio cell thereof. The radio resource congestion information indicates that a substantial amount of the available radio resources is occupied by multicast services, such that radio resources left for unicast are scarce and shall possibly only be used or accessed by mobile transceivers when necessary, for example, for important or emergency calls.

The apparatus for the mobile transceiver may be an apparatus which is directly or indirectly coupled to the mobile transceiver. A mobile transceiver may also be denoted as mobile terminal or UE. According to some embodiments, the apparatus may be directly integrated into a mobile transceiver by means of corresponding electronic circuitry and/or software components running on said electronic circuitry. A mobile transceiver may be integrated in a mobile terminal device, such as e.g. in a smartphone, a cell phone, a user equipment, a laptop, a notebook, a personal computer, a Personal Digital Assistant (PDA), an Universal Serial Bus (USB) -stick, a car, etc.

According to various embodiments the communication system may, for example, correspond to one of the mobile communication systems standardized by the 3rd Generation Partnership Project (3GPP), as Universal Terrestrial Radio Access Network (UTRAN) or Evolved UTRAN (E-UTRAN), e.g. Universal Mobile Telecommunication System (UMTS), a Global System for Mobile Communication (GSM) or Enhanced Data Rates for GSM Evolution (EDGE) network, a GSM/EDGE Radio Access Network (GERAN), Long-term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Code Division Multiple Access (CDMA), Orthogonal Frequency Division Multiple Access (OFDMA), Frequency Division Multiple Access (FDMA), Time Division Multiple Access (TDMA), etc. In the following the terms mobile communication system and mobile communication network are used interchangeably.

Moreover, the term radio resources may be understood as an element or a combination of elements of the group of a frequency resource, a bandwidth, a carrier, a sub-carrier, a time resource, a radio frame, a time slot, a symbol, a sub-frame, a Time Transmission Interval (TTI), a code resource, an Analog Spectrum Modulation (ASM) symbol, a Digital Spectrum Modulation (DSM) symbol, a Frequency Shift Keying (FSK) symbol, a Phase Shift Keying (PSK) symbol, a Pulse Code Modulation (PCM) symbol, a Quaternary Amplitude Modulation (QAM) symbol, a Frequency Hopping Spread Spectrum (FHSS) sequence, a Direct Sequence Spread Spectrum (DSSS) sequence, etc. In embodiments the plurality of radio resources may thus correspond to one of or a combination of the group of time resources, frequency resources, coding resources or transmission techniques. For example, a Data Radio Bearer (DRBs) also comprises a combination of physical radio resources and, hence, may be regarded as a radio resource itself.

The limited set of radio resources may, according to some embodiments, be understood as a plurality of radio resources which is associated to one particular frequency carrier or to one contiguous frequency band associated to one frequency carrier. In LTE, for example, the limited set of radio resources may be regarded as radio resource blocks associated to a contiguous frequency band of 5, 10, 15, or 20 MHz, for example.

The wireless communication system, or a radio cell thereof, may deliver both multicast (e.g. MBMS) and unicast services to its associated mobile terminals, which may be in RRC idle mode or in RRC connected mode, depending on which service they are presently using. For example, a significant part of cell's available downlink radio resources may be occupied by one or more multicast services. This could, for example, happen if a significant amount of mobile terminals associated to said cell decide to watch a popular TV program via IP TV. Furthermore, some of the remaining radio resources may be occupied by unicast services, like voice calls, for example. In this case, embodiments may inform associated UEs of a radio resource congestion situation, i.e., that the remaining radio resources left available for setting up unicast services has reached a lower critical value. Hence, the radio resource congestion information indicates that a number of radio resources left available for delivering unicast services an associated mobile transceiver is below said lower critical value, which is the radio resource congestion threshold value. In other words, the radio resource congestion information may at least implicitly indicate that a number radio resources which are occupied by one or more multicast services, is above a certain multicast congestion threshold value.

Preferably, but not exclusively, mobile terminals in or in the transition to RRC idle mode are informed of the radio resource congestion situation in order to control radio network access of mobile terminals in RRC idle mode based on the radio resource congestion information or "congestion indication" information.

According to some embodiments, the radio resource "congestion indication" information may be signaled to the mobile terminal using mobile terminal specific RRC control messages, hence, network signaling messages, which are only dedicated to one mobile terminal. For example, the radio resource congestion information may be signaled from the communication network to the mobile terminal using a "RRC Connection Release" message for releasing a mobile terminal from RRC connected mode into RRC idle mode. However, the radio resource congestion information may also be sent by using a new RRC message which is independent of the "RRC Connection Release" message. For example, the radio resource congestion information could also be signaled from the network to a plurality of mobile terminals which are associated to a radio cell. That is to say, the radio resource congestion information may also be signaled to the mobile terminal by using cell specific RRC signaling.

The radio resource congestion information may comprise a "congestion indicator" part and a "congestion indicator timer" part. Upon reception of the "congestion indicator" part and the "congestion indicator timer" part, the mobile terminal may not attempt to access or establish new DRBs on the congested multicast frequency carrier for the duration indicated by the "congestion indicator timer", unless its intends to prioritize unicast services over multicast services. Hence, the radio resource congestion information may comprise a congestion indicator timer being indicative of a time interval, during which a mobile transceiver's attempt for accessing any of the radio resources left available for delivering unicast services depends on a relation between a priority of the unicast service and a priority of the multicast service. As long as the congestion indicator timer is running the mobile terminal may only attempt to establish a RRC connection or access new DRB's if it assigns unicast services a higher priority than multicast services.

According to one embodiment, a RRC connection from a RRC Idle mobile terminal in a congested radio resource scenario may, hence, be prevented by providing a "congestion indicator" and "congestion indicator timer" to the mobile terminal. The "congestion indicator" and "congestion indicator timer" may be provided to the mobile terminal using mobile terminal specific RRC signalling. One possible message may be the "RRC Connection Release" message. Upon reception of the RRC message the mobile terminal may start a timer corresponding to the congestion indicator timer at the mobile terminal. If the mobile terminal prioritizes multicast over unicast, the mobile terminal may not attempt to establish a RRC connection on the congested multicast/MBMS frequency carrier while the "congestion indicator timer" is still running, i.e., has not elapsed. If, however, the mobile terminal prioritizes unicast over multicast, the mobile terminal may stop the congestion indicator timer prior to requesting a RRC connection from the communication network.

Alternatively or additionally, according to a further embodiment, the mobile terminal may also not attempt to access or establish new bearers on the congested multicast frequency carrier until a "congestion end indicator" is received. Hence, the mobile terminal's bearer or radio resource access during the multicast related radio resource congestion period may be controlled based on "congestion indicator" and "congestion end indicator" in this embodiment.

Upon reception of the "congestion indicator" on the multicast/MBMS frequency, the mobile terminal may make a decision to prioritize multicast over unicast. The mobile terminal may inform or signal its priority decision to the network. After signalling the mobile terminal's willingness to prioritise multicast over unicast, the mobile terminal may refrain from establishing new unicast bearers, if the mobile terminal is in RRC connected mode, or may refrain from establishing a RRC connection, if the mobile terminal is in RRC idle mode, until the reception of the "congestion end indicator". However, if the mobile terminal has changed its priority and, hence, is willing to prioritise unicast over multicast, the mobile terminal can request for new bearers or RRC connections during the multicast related radio resource or bearer congestion period.

Hence, the apparatus for the mobile transceiver may be operable to receive, after receiving the radio resource congestion information, a congestion end indicator indicating that the number of radio resources left available for delivering unicast services to the mobile transceiver is above the radio resource congestion threshold. According to embodiments the mobile transceiver may be operable to avoid accessing any of the radio resources left available for delivering unicast services until the means for receiving the radio resource congestion information receives the congestion end indicator.

Moreover, the apparatus for the mobile transceiver may further comprise means for determining information on whether a priority of a unicast service is higher than a priority of the multicast service, and means for controlling a data exchange between the mobile transceiver and the communication system based on a relation between a priority of the unicast service and a priority of the multicast service. If unicast services are prioritized over multicast services, such as MBMS, the mobile terminal may be allowed to access the wireless network on the congested multicast frequency cell regardless of a received congestion indicator or a congestion indicator timer.

The means for controlling the data exchange may be operable to avoid occupying any radio resources of the set of radio resources for the unicast service, in case the priority of the multicast service has been determined to be higher than the priority of the unicast service.

According to yet a further embodiment, the mobile terminal may be receiving a multicast service (e.g. MBMS) in RRC idle mode. During the reception of said multicast service in RRC idle mode the mobile terminal may not be provided with the congestion indicator and/or the congestion indicator timer, i.e. the radio resource congestion information. Hence, the mobile terminal has not been provided with information on the radio resource congestion related to multicast/MBMS frequency carrier it is camping on. The mobile terminal may request a RRC connection either due to a mobile originated call or due to a mobile terminated call. While requesting the RRC connection, the mobile terminal may be receiving the multicast service on the same carrier frequency from the same cell. Upon completion of the RRC connection setup, the mobile terminal may inform the network of its interest to receive a multicast service by informing the network of a desired multicast service frequency carrier and/or a corresponding multicast service ID. In case the requested multicast service frequency carrier, i.e. the radio resources corresponding or associated thereto, is congested, the network may inform the mobile terminal of the multicast related radio resource congestion situation on the desired frequency carrier. After the mobile terminal has gotten knowledge of the possible radio resource congestion situation on the desired multicast service frequency carrier, the mobile terminal may decide to prioritize multicast over unicast such that the mobile terminal is able to receive multicast/MBMS service without interruption. Hence, the means for controlling the data exchange may be operable to uninterruptedly receive a multicast service the mobile transceiver or terminal has subscribed to, in case the priority of the multicast service has been determined to be higher than the priority of the unicast service.

The network may be informed about the mobile terminal's priority decision, such that the network may decide either to release some unicast related bearers but to keep the mobile terminal in connected mode, or to release the mobile terminal's (dedicated) RRC connection. In case of a RRC connection release the mobile terminal may be informed via the radio resource congestion information comprising the "congestion indicator" and "congestion indicator timer". Note, that during the RRC connection establishment and the congestion-scenario-related communication between the mobile terminal and the network, the mobile terminal's multicast reception is not interrupted in this embodiment. After the RRC connection release the mobile terminal may continue to receive the multicast service of interest. That is to say, the means for controlling the data exchange may be operable to uninterruptedly receive the multicast service even when the mobile transceiver is instructed to change from a RRC connected state to a RRC idle state, or vice versa.

According to a further embodiment of the present invention, the mobile terminal may be required to monitor a paging channel while being in RRC idle and while the "congestion indicator timer" is running. If the mobile terminal receives a paging message, the mobile terminal may stop the "congestion indicator timer" and, as a response to paging, the mobile terminal may request a RRC connection from the network regardless of whether the mobile terminal is willing to prioritize multicast over unicast. Hence, the mobile transceiver apparatus may further comprise means for receiving paging information from the communication system. In such an embodiment the means for controlling the data exchange may be operable to request at least one radio resource of the radio resources left available for delivering unicast services for establishing a RRC connection between the mobile terminal and the communication network in response to the received paging information. Thereby, the at least one radio resource may be requested independently of whether the priority of the unicast service is higher or lower than the priority of the multicast service.

According to a further aspect of the present invention it is also provided an apparatus for a base station transceiver of a communication system using a limited set of radio resources for delivering multicast and unicast services to associated mobile transceivers. The apparatus comprises means for transmitting, providing or signaling, from base station transceiver to a mobile transceiver, radio resource congestion information indicating that a number of radio resources left available for delivering unicast services to the mobile transceiver is below a radio resource congestion threshold.

A base station transceiver can be a wireless interface of a wired network, which enables transmission of radio signals to a user equipment or mobile transceiver. Such radio signal may comply with radio signals as, for example, standardized by the 3^{rd} Generation Partnership Project (3GPP) or, generally, in line with the above listed systems. Thus, a base station transceiver may correspond to a NodeB, an eNodeB, an access point, etc. Beside a communication system comprising apparatuses for base stations and mobile transceivers according to embodiments of the present invention, it is also provided a method for said communication system having associated thereto a limited set of radio resources for delivering multicast and unicast services to associated mobile transceivers. The method comprises a step of providing or signaling a radio resource congestion information to at least one of the associated mobile transceivers, wherein the radio resource congestion information indicates that a number of radio resources left available for delivering unicast services to the at least one associated mobile transceiver is below a radio resource congestion threshold.

Some embodiments also comprise a digital control circuit installed within an apparatus for performing the method. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

As mentioned above, the radio resource congestion information may be preferably provided to the mobile terminal when the mobile terminal is in an idle mode of a Radio Resource Control (RRC) protocol, i.e. RRC idle mode, in order to control or limit the network access of idle terminals based on said radio resource congestion information.

Embodiments of the present invention provide a concept for controlling the access by RRC idle UEs based on radio resource congestion information comprising a "congestion indication", a "congestion indicator timer" and/or a "congestion end indicator", wherein the radio resource congestion information is provided to the UE from the network. According to one embodiment, the radio resource congestion information may be signaled on a dedicated or UE-specific "RRC Connection Release" message, while in other embodiments the radio resource congestion information comprising the "congestion indication", the "congestion indicator timer" and/or the "congestion end indicator" could also be signaled using radio cell specific RRC signaling, i.e., RRC signaling that reaches all mobile terminals associated to the radio cell. Upon reception of the "congestion indicator" and "congestion indicator timer", a UE may not attempt to access or establish new bearers on the congested multicast frequency cell for the duration indicated by the "congestion indicator timer" unless its intends to prioritize unicast over multicast, like MBMS. According to other embodiments, the UE may not attempt to access or establish new bearers on the congested multicast frequency until the "congestion end indicator" is received.

Embodiments of the present invention may allow users to continuously receive desired multicast/MBMS service(s) while their mobile terminals are connected to the network, respectively, even when there is a radio resource limitation to provide unicast services on the corresponding MBMS frequency carrier. Therefore, an end user experience may be enhanced.

### Brief description of the Figures

Some other features or aspects will be described using the following non-limiting embodiments of apparatuses and/or methods and/or computer programs by way of example only, and with reference to the accompanying figures, in which
- Fig. 1: schematically illustrates a communication system comprising a base station apparatus and a plurality of mobile transceiver apparatuses, according to an embodiment of the present invention;
- Fig. 2: shows a first message sequence chart illustrating a first embodiment of the present invention;
- Fig. 3: shows a second message sequence chart illustrating a second embodiment of the present invention;
- Fig. 4: shows a third message sequence chart illustrating a third embodiment of the present invention;
- Fig. 5: shows a fourth message sequence chart illustrating a fourth embodiment of the present invention; and
- Fig. 6: schematically illustrates a flow chart of a method for signaling congestion information, according to an embodiment of the present invention

### Description of some Embodiments

Various example embodiments will now be described more fully with reference to the accompanying figures in which some example embodiments are illustrated. In the figures, the thicknesses of layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Following the 3GPP Release 9/10 principles, a mobile terminal or UE handover is decided based on unicast services. In case of radio resource limitation, the network may move the UE to another frequency carrier in order to maintain the established unicast connection.

If the mobile terminal has been receiving a multicast service (e.g. MBMS) on the frequency carrier prior to the handover, the mobile terminal loses the multicast service reception when it is handed over to the new frequency carrier unless the mobile terminal is capable of dual reception, which may also be referred to as dual band reception. The mobile terminal's user may then choose to close the unicast application in order to prioritise the multicast service. However, since the RRC connection release is under network control, even closing unicast applications may not guarantee that the previously established RRC connection is released (due to default bearers) to enable a user to receive multicast services. Hence, this is not considered to be sufficient for 3GPP beyond-10-Releases.

Note that 3GPP Release 11 is designed to provide service continuity for multicast services. If a mobile terminal is receiving a multicast service while it is connected to the network (RRC connected mode), the network should provide for the multicast service's continuity. Both, unicast and multicast services are multiplexed on the same carrier. If there is a radio resource limitation with respect to unicast traffic, the communication network may hand the mobile terminal over to another frequency carrier where the established unicast connection can be maintained. Given that the mobile terminal is moved away from the frequency carrier which provides its multicast service of interest, multicast service continuity is may not be maintained.

In some scenarios, a mobile terminal may be willing to prioritize a multicast service over a unicast application. The mobile terminal may decide on service prioritisation based on the mobile terminal's user interest and/or on-going services. The mobile terminal may signal the network its interest to prioritise a multicast service over unicast, for example via a dedicated RRC message. The same RRC message which is used to inform the user's multicast service interest (MBMSInterestIndication) could be used to signal the multicast service's priority over unicast. There are two possibilities of when to indicate the multicast service priority over unicast to the network:
a) indicate multicast priority over unicast whenever *MBMSInterestIndication* is sent
b) indicate multicast priority over unicast when congestion has occurred.

According to option a), the mobile terminal indicates to the network its willingness to prioritise multicast over unicast whenever *MBMSInterestIndication* is sent from the mobile terminal to the communication network or a base station thereof. Therefore, the mobile terminal does not require knowledge of radio resource congestion on the multicast frequency carrier at the time when multicast priority over unicast is indicated. It has been agreed that the mobile terminal may transmit the *MBMSInterestIndication* message whenever its multicast/MBMS interest changes w.r.t. the signalled information. If the interested multicast or MBMS service is not changed, but the mobile terminal's willingness to prioritise multicast over unicast changes, the mobile terminal may transmit *MBMSInterestIndication.* Hence, the frequency of *MBMSInterestIndication* transmissions may increase. On the other hand, this information is only required by the communication network when there is congestion on the multicast frequency carrier. Otherwise, the signalled information is not useful.

According to the aforementioned option b), the mobile terminal may only be required to provide its willingness to prioritise multicast over unicast when there is congestion on interested multicast frequency carrier or band. Unnecessary signalling of *MBMSInterestIndication* may hence be avoided. However, the congestion situation is required to be informed to those mobile terminals whose services may be impacted by the resource limitation on the MBMS frequency carrier.

According to an agreement of TSG RAN WG2 (Radio layer 2 and Radio layer 3 RR), it is left to network implementation whether to release a RRC connection or some or all Guaranteed Bit Rate (GBR) bearers. If the mobile terminal is kept in RRC connected mode with release of some dedicated bearers, the mobile terminal can decide whether to accept an incoming call or not after identifying the call's originating party (source). From this point of view, it is better to keep the mobile terminal's connection (hence default bearers) and at least the dedicated bearer which carries Session Initiation Protocol (SIP) signalling during the radio resource congestion period. If the multicast service interest or the multicast service priority relative to unicast is changed, the mobile terminal could inform the network of change of interest. If the mobile terminal requests for a unicast service during the radio resource congestion, this may imply a change of the user's interest to the network. There may also be a need for notifying the users or their corresponding mobile terminals when the radio resource congestion is over. The information should only be required by the impacted mobile terminals. The radio resource congestion may be relaxed due to the end of a popular program, for example. As it is likely that the mobile terminal's multicast service interest may have changed, the network only needs to inform the alleviation of congestion to the mobile terminal which still indicates the multicast service reception of the corresponding frequency carrier, which experienced congestion previously. That is to say, if the mobile terminal has been informed of congestion and the mobile terminal is still interested in receiving multicast/MBMS on the same frequency carrier, the network may inform the mobile terminal about the end of the congestion scenario. As the network may already have released some bearers as a way of congestion control, an "end congestion indicator" may be needed for the mobile terminal to establish new unicast bearers. However, if the mobile terminal is not interested in the multicast/MBMS frequency anymore, the network has the opportunity to handover the mobile terminal to another non-congested frequency carrier.

With release of a RRC connection the mobile terminal is transferred to RRC_Idle mode and may receive the multicast service. In case the user's multicast frequency of interest changes, the mobile terminal may perform a cell re-selection and may be connected to a cell potentially serving another frequency carrier. However, if the mobile terminal wants to originate a call, i.e., prioritise unicast over multicast, the mobile terminal should be provided with the possibility of originating a call in the cell it is currently camping on during the congestion period.

Moreover, if an incoming call is received, i.e. the UE is paged, during the radio resource congestion on the MBMS frequency carrier, the mobile terminal cannot identify the call's originating party without connecting to the network. The call's originating party may only be identified during a SIP invite procedure, where the messages are transmitted over dedicated bearers. Upon identifying the originating caller's ID, the mobile terminal may decide on whether to accept or abort the incoming call. For example, if the incoming call is from an important party, the mobile terminal may prioritise unicast over multicast reception. Therefore, for any incoming calls, the mobile terminal should be connected to the network even to identify the call's originating party.

On the other hand, aforementioned current access control mechanisms such as "access class barring" and/or "wait time" could be used to prevent/control a mobile terminal's attempt to request a RRC connection on the multicast service congested frequency carrier. Conventional access control mechanisms do not take into account the relative priority of multicast and unicast. These mechanisms do not allow a user to change his relative priorities during the multicast service congestion period. For example, according to the current use of "wait time", a mobile terminal is not allowed to originate or accept a mobile terminal terminated call during the specified wait time. Hence, if a mobile terminal's interest has changed during the multicast service congestion period, the multicast service does not have any possibility of informing the network of its change of interest when the wait time is applied. If paging for a network terminating call is received, the mobile terminal will not be able to connect to the network to know the calling user's ID. Hence, the mobile terminal will not have any opportunity to change its priority decision based on the importance of the calling party.

Even though it seems to be necessary to let a mobile terminal in RRC Idle mode change its willingness to prioritise multicast over unicast during radio resource congestion due to multicast services on interested multicast frequency carriers, it is also desirable to control or prevent a mobile terminal in RRC Idle mode from establishing a RRC connection on the congested multicast frequency carrier unless it has prioritised unicast over MBMS.

For that purpose, embodiments of the present invention provide apparatuses for mobile transceivers, apparatuses for base station transceivers, methods which may be performed by mobile transceivers and base station transceivers, a communication system comprising apparatuses for mobile transceivers and apparatuses for base station transceivers, and a method for such a communication system. All embodiments may prevent a mobile transceiver from establishing a RRC connection or accessing additional DRBs on a multicast service congested frequency carrier, unless the mobile transceiver has prioritized unicast services over multicast services.

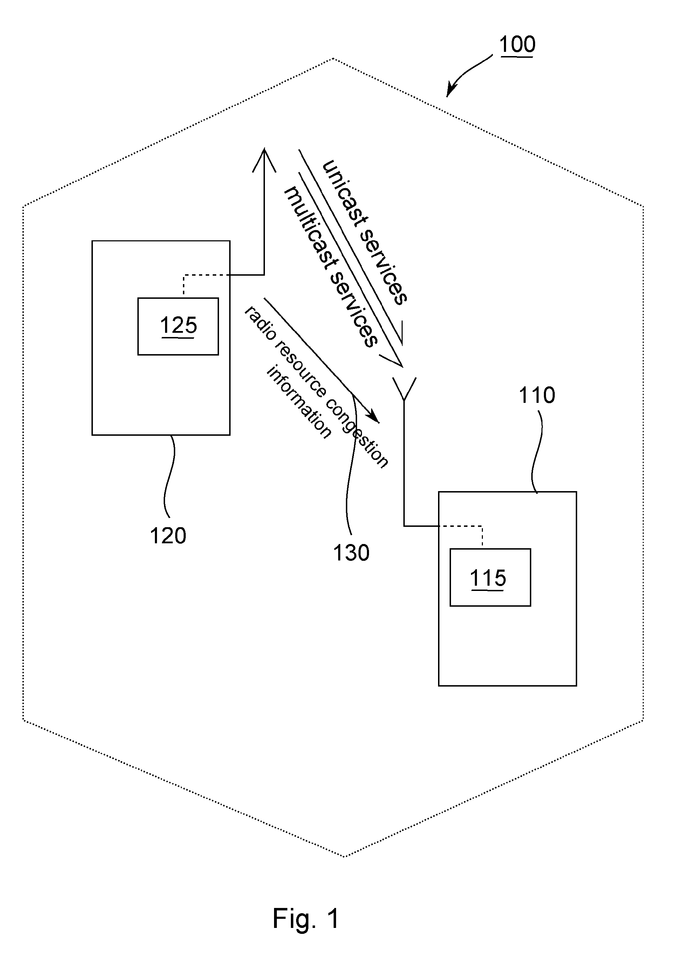

Fig. 1 schematically illustrates a wireless communication system 100 and, in particular, a radio cell thereof.

The communication system 100 comprises both an apparatus 110 for a mobile transceiver, which may also be referred to as mobile transceiver apparatus, and an apparatus 120 for a base station transceiver, which may also be referred to as base station transceiver apparatus. The communication system 100, or the base station transceiver apparatus 120 thereof, uses a limited set of radio resources / bearers for delivering multicast and unicast services to mobile transceiver apparatuses 110 associated to the communication network 100. For example, multicast data traffic and unicast data traffic may be transmitted to the mobile transceiver apparatuses 110 in a time-multiplexed manner on the same frequency carrier. The base station transceiver apparatus 120 comprises means 125 for transmitting, from the base station transceiver to an associated mobile transceiver 110, radio resource congestion information 130 indicating that a number of radio resources left available for delivering unicast services to the associated mobile transceiver 110 is below a certain radio resource congestion threshold. Likewise, as a counterpart for the means 125, the mobile transceiver apparatuses 110 comprises means 115 for receiving, from the communication network 100 or the base station 120 thereof, the radio resource congestion information 130.

The radio resource congestion information is indicative of a radio resource scarcity due to the fact that a significant part of the radio cell's available radio resources is occupied by multicast traffic, and, hence, may not be used for unicast communications. Only a non-multicast-occupied subset of the radio cell's radio resources may be occupied by unicast services. Hence, the network 100 may only be able to provide a relatively small number of radio resources for further unicast services, which may need to be established, for example, for important reasons, like emergency calls. That is to say, the radio resource congestion information indicates that the number of the radio cell's radio resources or bearers available for unicast traffic has fallen below a critical threshold value, which may be a variable system parameter.

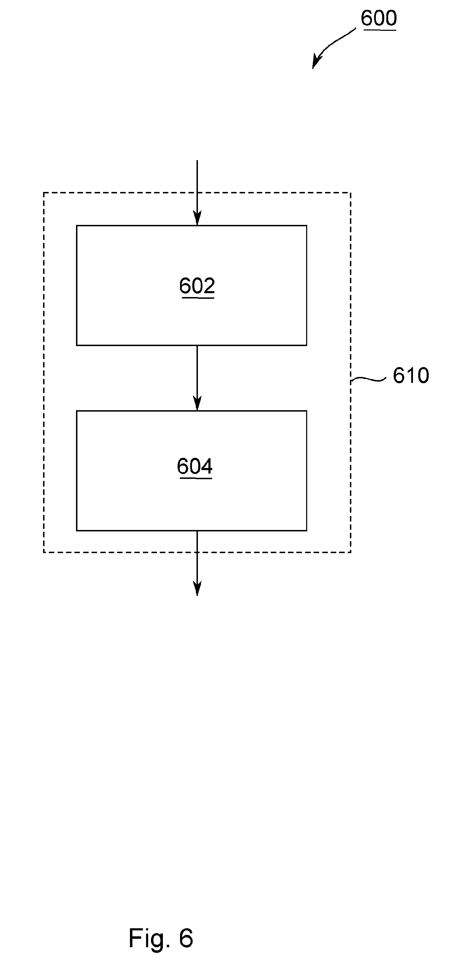

As illustrated in Fig. 6, the following method 600 is performed by the components of the communication system 100.

Upon the occurrence of the multicast related radio resource congestion the base station transceiver apparatus 120 informs an associated mobile transceiver 110 of said resource congestion by a step 602 of transmitting, from the base station transceiver 120 to the mobile transceiver 110, the radio resource congestion information 130. In step 604, the mobile transceiver 110 receives the radio resource congestion information 130 from the base station 120. The steps 602 and 604 together form a step 610 of providing or signaling, from the network 100 to the mobile transceiver 110, the radio resource congestion information 130.

According to embodiments, the radio resource congestion information 130 may comprise a congestion indicator, a congestion indicator timer and/or a congestion end indicator. The congestion indicator timer may be indicative of a time interval, during which the mobile transceiver's 110 attempt for accessing any of the radio resources left available for delivering unicast services may depend on a relationship between a priority of the unicast service and a priority of the multicast service. The congestion end indicator may be indicative of the end of the multicast related radio resource congestion situation. For example, it may indicate that the radio cell's number of radio resources left available for delivering unicast services to the mobile transceiver 110 has risen above the radio resource congestion threshold again.

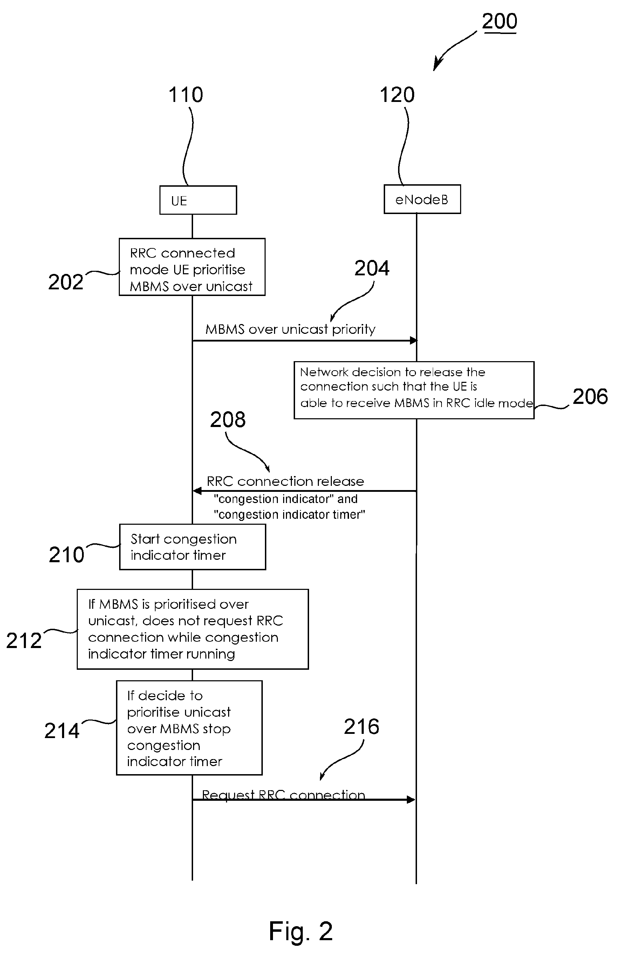

Fig. 2 illustrates a message sequence chart 200 of one embodiment of the present invention, wherein an establishment of a RRC connection from a mobile terminal 110 being in RRC idle mode may be prevented by providing the radio resource congestion information 130 comprising the congestion indicator and the congestion indicator timer to the mobile terminal 110.

According to Fig. 2 the mobile terminal or UE 110 is in a RRC connected mode at the beginning of the illustrated message sequence, see reference numeral 202. Since the UE 110 wishes to prioritize multicast/ MBMS services over unicast services it may transmit a corresponding priority or priority change message to the communication network 100 (or the base station transceiver 120 thereof), see step 204. In response to the mobile terminal's priority message the communication network 100 decides to release the RRC connection such that the mobile terminal 110 gets able to receive its desired multicast service in RRC idle mode, see reference numeral 206. Upon the network's RRC connection release decision of step 206 the network 100 communicates a corresponding RRC connection release message carrying radio resource congestion information 130, which indicates that a number of radio resources or bearers left available for delivering unicast services to the mobile transceiver 110 is below a network dependent radio resource congestion threshold value (see step 208). For that purpose, the UE specific RRC connection release message may signal the congestion indicator and the congestion indicator timer from the network 100 to the mobile terminal 110. Upon reception of the radio resource congestion information 130 the mobile terminal 110 may start a timer countdown corresponding to the received congestion indicator timer, see step 210. For example, the countdown may last for a plurality of seconds or minutes. During the countdown the mobile terminal, which now is in RRC idle mode, does not request any RRC connections in case multicast is prioritized over unicast (see step 212). In order to make this multicast-unicast-priority decision, the mobile transceiver apparatus 110 may comprise means for determining information on whether a priority of a unicast service is to be regarded higher than the priority of a multicast service, and means for controlling a data exchange between the mobile transceiver 110 and the communication system 100 based on a relation between the priority of the unicast service and the priority of the multicast service. According to step 212, the means for controlling the data exchange may be operable to avoid occupying or accessing any of the cell's radio resources left available for delivering unicast services, in case the priority of the multicast service has been determined to be higher than the priority of the unicast service. On the other hand, the means for controlling the data exchange may be operable to stop the countdown, i.e., to stop the congestion indicator timer, in case the priority of the multicast service has been determined to be lower than the priority of the unicast service. Hence, if the mobile terminal 130 decides to prioritize unicast over multicast/MBMS, it may stop the congestion indicator timer from running, see step 214. After step 214 a RRC connection request message may be sent from the mobile terminal 210 to the communication system 100, see step 216, in order to set up a RRC connection again (e.g. for a unicast service).

Hence, according to the embodiment illustrated in Fig. 2, a RRC connection from a mobile terminal 110 in RRC idle state may be prevented by providing a congestion indicator and a congestion indicator timer from the network 100 to the mobile terminal 110, wherein the congestion indicator and the congestion indicator timer may be provided to the mobile terminal 110 using mobile terminal or UE specific RRC signalling. According to the example illustrated in Fig. 2, this could be a UE specific RRC connection release message (see step 208). Upon reception of said RRC message, the mobile terminal 110 may start a timer reflecting the received congestion indicator timer. As long as the mobile terminal 110 wishes to prioritize multicast over unicast, the mobile terminal 110 shall not be able to establish a RRC connection on the multicast service congested frequency carrier, while the congestion indicator timer is still running. If however, the mobile terminal 110 wishes to prioritize unicast services over multicast services, the mobile terminal 110 may stop the congestion indicator timer or the corresponding countdown prior to requesting a new RRC connection from the network 100.

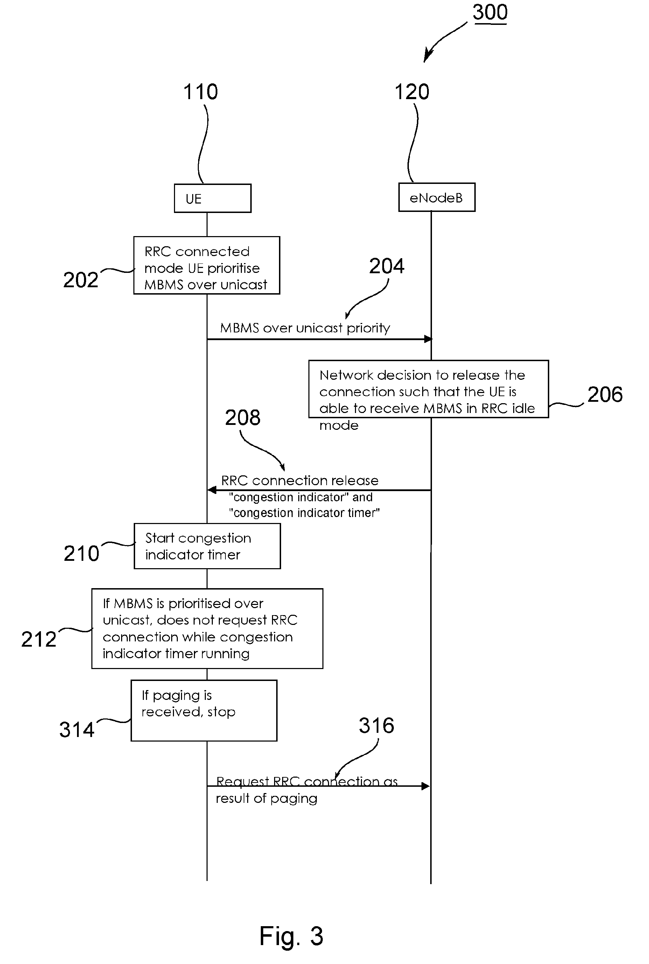

The embodiment illustrated by means of the message sequence chart 300 of Fig. 3 differs from the embodiment explained with reference to Fig. 2 only in steps 314 and 316. Here, the mobile terminal 110, while being in RRC idle mode and having the congestion indicator timer running, is paged in step 314. That is to say, while having associated a higher priority to multicast services compared to unicast services someone tries to call the mobile terminal 110. For that purpose, the mobile transceiver apparatus 110 may further comprise means for receiving paging information. If said paging information is received (see step 314) the countdown corresponding to the congestion indicator timer may be stopped before the mobile transceiver 110 transmits RRC connection request message in response to the paging information, see step 316. In other words, the mobile transceiver's means for controlling the data exchange may be operable to request at least one radio resource of the radio resources left available for delivering unicast services in order to establish a RRC connection in response to the received paging information. This may be done independently of whether the priority of the unicast service is higher or lower than the priority of the multicast service, which means that the countdown corresponding to the congestion indicator timer may be stopped by all means in this embodiment.

Hence, according to the embodiment illustrated in Fig. 3, the UE 110 may be required to monitor a paging channel while the congestion indicator timer is running. If the mobile transceiver 110 receives a paging request, the mobile transceiver 110 may stop the countdown corresponding to the congestion indicator timer and, as a response to thepaging request, mobile transceiver 110 may request a RRC connection from the network 100, regardless of whether the mobile terminal 110 is willing to prioritize multicast over unicast, or vice versa.

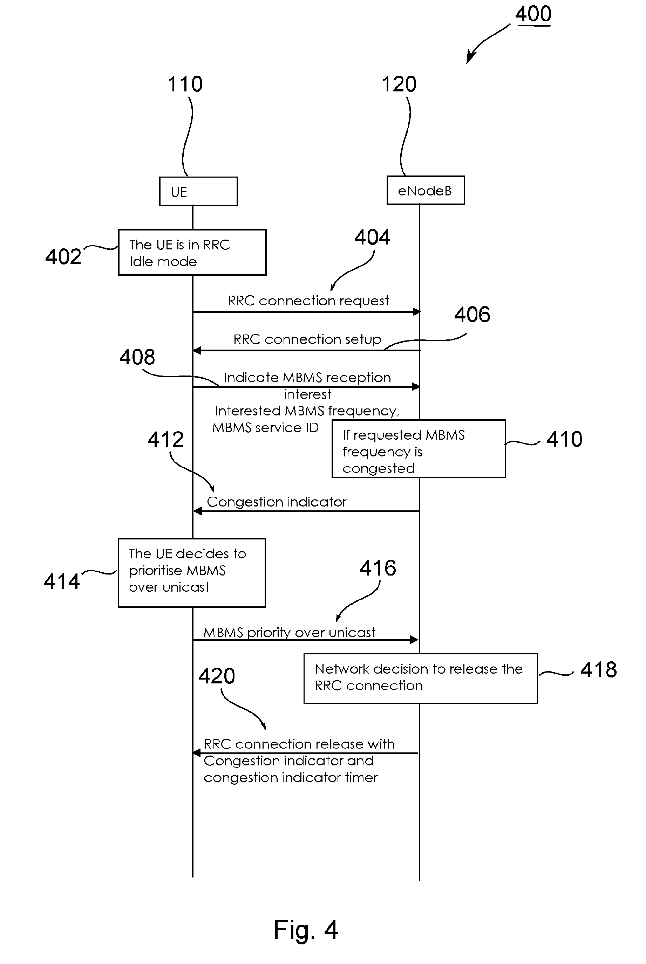

The message sequence chart of Fig. 4, which relates to a further embodiment of the present invention, shows the mobile terminal 110 being in RRC idle mode in the beginning, see reference numeral 402. From the RRC idle mode 402 the mobile terminal 110 sends a RRC connection request message 404 to the base station transceiver apparatus 120 of the communication network 100. In response to said RRC connection request message 404 the mobile terminal 110 is brought into RRC connected mode via a RRC connection setup 406. While being in RRC connected mode the mobile terminal 110 indicates to the network 100 that it is interested in multicast reception and also communicates the multicast service frequency of its desired multicast service to the communication network 100, see step 408. In case the requested multicast service frequency carrier is congested, i.e., in case said frequency carrier may only provide a number radio resources for unicast communication below a given threshold (radio resource congestion threshold), the network 100 informs the mobile terminal 110 about the multicast related radio resource congestion situation by transmitting a congestion indicator in step 412. As the mobile terminal 110 still wishes to receive the desired multicast service it decides to prioritize multicast services over unicast services in step 414 and informs the network 100 about its decision to associate a higher priority to multicast services then to unicast services, see step 416. Upon the reception of this priority message from the mobile terminal 110, the communication network 100 may decide to release the formerly established RRC connection in step 418. According to its release decision of step 418, the network may transmit the radio resource congestion information 139 to the mobile terminal 110, e.g. by using a RRC connection release message, see step 420. Following the RRC connection release message of step 420 the mobile terminal 110 again turns to RRC idle mode and runs the countdown corresponding to the congestion indicator timer.

According to the embodiment illustrated in Fig. 4, the mobile terminal 110 may first be receiving a multicast/MBMS service in RRC idle mode. In this state the mobile terminal 110 has not yet been provided with the congestion indicator or the congestion indicator timer. Therefore, the mobile terminal 110 has not yet any information on the multicast related congestion situation with respect to the desired multicast frequency carrier it is camping on. The UE or mobile terminal 110 may request a RRC connection, e.g. either due to a mobile originated call or due to a mobile terminated call. While requesting the RRC connection, the mobile terminal 110 may be receiving the multicast service on the same frequency carrier from the same cell. Upon completion of the RRC connection setup, the mobile terminal 110 may inform the network of its interest to receive the multicast service by transmitting the desired multicast frequency carrier and/or the multicast service ID to the network (see step 408). If the requested multicast frequency carrier is congested, the network 100 may inform the mobile terminal 110 of the congestion situation with respect to the desired frequency carrier. Having the knowledge about the radio resource congestion situation with respect to the desired multicast frequency carrier, the mobile terminal 110 may then decide to prioritize multicast over unicast, such that the mobile terminal 110 is able to receive the desired multicast service without any interruption. The priority decision may be informed to the network 100 (see step 416). The network 100 may then decide either to release some DRBs and to keep the mobile terminal 110 in connected mode, or to completely release the established RRC connection. In the latter case the mobile terminal 110 may be informed of the congestion indicator and the congestion indicator timer via a UE specific RRC connection release message from the network 100. However, also other RRC messages are conceivable for transmitting the radio resource congestion information from the network 100 to the mobile terminal 110, as, for example, radio cell specific RRC signalling messages. Note, that during the RRC connection establishment and during the communication between the mobile terminal 110 and the network 100 regarding the congestion scenario, the mobile terminal's multicast service reception is never interrupted. Even after the RRC connection release the mobile terminal 110 may continue to receive its multicast service of interest. Hence, the means for controlling the data exchange between the mobile terminal 110 and the communication system 100 may be operable to uninterruptedly receive the multicast service the mobile transceiver has subscribed to, in case the priority of the multicast service has been determined to be higher than the priority of the unicast service.

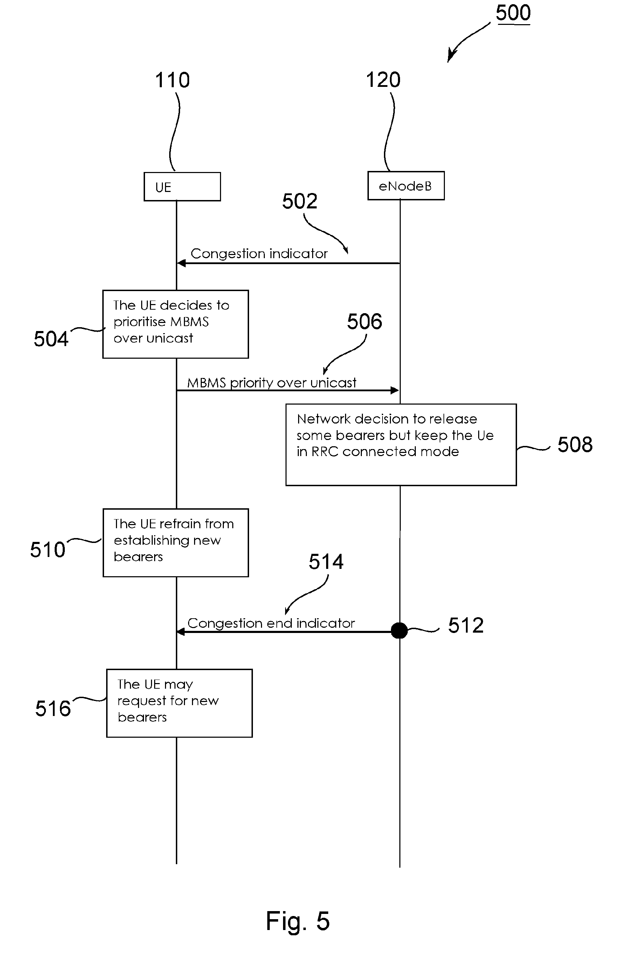

Turning now to Fig. 5, it is illustrated an embodiment where the radio resource congestion information 130 is provided to a mobile terminal in RRC connected mode.

While being in RRC connected mode the mobile terminal 110 receives the radio resource congestion information 130 comprising the congestion indicator from the communication network 100 in a step 502. The received radio resource congestion information 130 brings the mobile terminal 110 into the position to know that an amount of radio resources left available for delivering unicast services to mobile transceivers attached to the base station 120 has fallen below a certain resource congestion threshold. Based on this knowledge and its own traffic situation the mobile terminal 110 may decide to prioritize multicast services over unicast services (see step 504), e.g. because the user of the mobile terminal 110 prefers to watch a mobile TV program. This information on whether the priority of unicast services is considered to be higher than the priority of multicast services may then be communicated from the mobile terminal 110 to the network 100 in step 506. Hence, according to embodiments, the mobile transceiver 110 may also comprise means for transmitting the information on whether the priority of the unicast service is considered to be higher than the priority of the multicast service to the communication network 100. Based on the received priority information from the mobile terminal 110, the network 100 may decide to release some unicast related radio bearers but to keep the mobile terminal in RRC connected mode, see step 508. Since the mobile terminal is still in possession of the radio resource congestion information 130 it may refrain from establishing new unicast related bearers in step 510, thereby protecting or saving the network's radio resources available for unicast services. At time instant 512 the congestion situation is over, i.e., the number of radio resources left available for delivering unicast services to the mobile transceiver may have risen above the radio resource congestion threshold again. This may be signalled to the mobile transceiver 110 by transmitting the congestion end indicator in step 514. Upon reception of the congestion end indicator the mobile terminal 110, still being in RRC connected mode, may again request for new unicast related bearers, see step 516.

Summarizing the embodiment explained with reference to Fig. 5, the access of radio resources of a mobile terminal in RRC connected mode may be controlled based on the congestion indicator comprised by the radio resource congestion information 130 and the congestion end indicator. Upon the reception of the congestion indicator related to the multicast service frequency carrier in step 502, the mobile terminal 110 may make a decision to prioritize multicast services over unicast services. The mobile terminal's decision may then be informed to the network 100. After transmitting the mobile terminal's willingness to prioritize multicast over unicast, the mobile terminal 110 may refrain from establishing new bearers is in RRC connected mode and/or may refrain from establishing a RRC connection when being in RRC idle mode, until the reception office the congestion end indicator in step 514. However, if the mobile terminal 110 has changed its priority settings and is willing to prioritize unicast over multicast, the mobile terminal 110 may request for new bearers or RRC connections also during the multicast related radio resource congestion period. In case the mobile terminal 110 is requested to monitor a paging channel regardless of whether the mobile terminal has prioritized multicast over unicast, and if the mobile terminal is indeed paged, the mobile terminal may request the establishment of a RRC connection even during the congestion period.

Please also note that in the embodiments illustrated with reference to Fig. 5 the congestion indicator and the congestion end indicator may be transmitted using dedicated, i.e. UE-specific, RRC messages, respectively. Alternatively or additionally, the radio resource congestion information comprising the congestion indicator and/or the congestion end indicator may also be signalled using radio cell specific RRC messages to UEs attached to a radio cell or base station, which is transmitting said radio cell specific RRC messages.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

To summarize, embodiments of the present invention provide a congestion control concept for unicast traffic on a multicast/MBMS carrier. Embodiments may provide MBMS service continuity for users who are receiving or are interested in receiving MBMS services. In particular, it is proposed the prevention of a RRC connection establishment by a mobile terminal, which is RRC idle mode and has prioritized MBMS over unicast. Furthermore, it has been disclosed how to provide radio resource congestion information (e.g. congestion indicator and congestion indicator timer) for controlling the mobile terminal's access during the radio resource congestion period due to multicast. Also, a mobile terminal's behavior upon the reception of the radio resource congestion information has been described.

The description and figures merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for combining", "means for adjusting", etc., may be provided through the use of dedicated hardware, such as "a combiner", "an adjustor", "a filter", "an adaptor", "a processor", "a controller ", "a DSP", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons.

Furthermore, in some embodiments a single step may include or may be broken into multiple sub-steps. Such sub-steps may be included and part of the disclosure of this single step unless explicitly excluded.

## Claims

1. An apparatus (110) for a mobile transceiver of a communication system (100), the communication system using a limited set of radio resources for delivering multicast and unicast services to associated mobile transceivers, the apparatus (110) comprising:
means (115) for receiving, from the communication system (100), radio resource congestion information (130) indicating that a number of radio resources left available for delivering unicast services to the mobile transceiver is below a radio resource congestion threshold.

2. The apparatus (110) of claim 1, wherein the radio resource congestion information (130) comprises a congestion indicator timer being indicative of a time interval, during which the mobile transceiver's attempt for accessing any of the radio resources left available for delivering unicast services depends on a relation between a priority of the unicast service and a priority of the multicast service.

3. The apparatus (110) of claim 1, wherein the mobile transceiver is operable to receive, after receiving the radio resource congestion information(130), a congestion end indicator indicating that the number of radio resources left available for delivering unicast services to the mobile transceiver is above the radio resource congestion threshold.

4. The apparatus (110) of claim 3, wherein the mobile transceiver is operable to avoid accessing any of the radio resources left available for delivering unicast services until the means (115) for receiving the radio resource congestion information (130) receives the congestion end indicator.

5. The apparatus (110) of claim 1, further comprising:
means for determining information on whether a priority of a unicast service is higher than a priority of the multicast service; and
means for controlling a data exchange between the mobile transceiver and the communication system based on a relation between a priority of the unicast service and a priority of the multicast service.

6. The apparatus (110) of claim 5, wherein the means for controlling the data exchange is operable to avoid occupying any of the radio resources left available for delivering unicast services, in case the priority of the multicast service has been determined to be higher than the priority of the unicast service.

7. The apparatus (110) of claim 5, wherein the means for controlling the data exchange is operable to uninterruptedly receive a multicast service the mobile transceiver has subscribed to, in case the priority of the multicast service has been determined to be higher than the priority of the unicast service.

8. The apparatus (110) of claim 7, wherein the means for controlling the data exchange is operable to uninterruptedly receive the multicast service even when the mobile transceiver is instructed to change from a RRC connected state to a RRC idle state, or vice versa.

9. The apparatus (110) of claim 5, further comprising:
means for receiving a paging information,
wherein the means for controlling the data exchange is operable to request at least radio resource of the number of radio resources left available for delivering unicast services for a RRC connection in response to the received paging information independent of whether the priority of the unicast service is higher or lower than the priority of the multicast service.

10. The apparatus (110) of claim 1, wherein the means (115) for receiving the radio resource congestion information (130) is operable to receive said radio resource congestion information (130) when the mobile terminal is in an idle mode of a Radio Resource Control (RRC) protocol.

11. The apparatus (110) of claim 1, wherein the set of radio resources is associated to a system carrier frequency of the communication system (100).

12. The apparatus (110) of claim 1 wherein the means (115) for receiving is operable to receive the radio resource congestion information (130) based on a mobile transceiver specific signaling from the communication system (100), or based on a radio cell specific signaling from the communication system (100).

13. An apparatus (120) for a base station transceiver of a communication system (100), the communication system (100) using a limited set of radio resources for delivering multicast and unicast services to associated mobile transceivers (110), the apparatus (120) comprising:
means (125) for transmitting, from base station transceiver to an associated mobile transceiver (110), radio resource congestion information (130) indicating that a number of radio resources left available for delivering unicast services to the mobile transceiver is below a radio resource congestion threshold.

14. A method (600) for a communication system (100), wherein the communication system (100) has associated thereto a limited set of radio resources for delivering multicast and unicast services to associated mobile transceivers (110), the method (600) comprising:
providing (610) radio resource congestion information (130) to at least one of the associated mobile transceivers (110), wherein the radio resource congestion information indicates that a number of radio resources left available for delivering unicast services to the at least one associated mobile transceiver (110) is below a radio resource congestion threshold.

15. A computer program having a program code for performing the method of claim 14, when the computer program is executed on a computer or processor.

## Amended claims

### Amended claims in accordance with Rule 137(2) EPC.

**1.** An apparatus (110) for a mobile transceiver of a communication system (100), the communication system using a limited set of radio resources for delivering multicast and unicast services to associated mobile transceivers, the apparatus (110) comprising:
means (115) for receiving, at the mobile transceiver from the communication system (100), radio resource congestion information (130) indicating that a number of radio resources left available for delivering unicast services to the mobile transceiver is below a radio resource congestion threshold.

**2.** The apparatus (110) of claim 1, wherein the radio resource congestion information (130) comprises a congestion indicator timer being indicative of a time interval, during which the mobile transceiver's attempt for accessing any of the radio resources left available for delivering unicast services depends on a relation between a priority of the unicast service and a priority of the multicast service.

**3.** The apparatus (110) of claim 1, wherein the mobile transceiver is operable to receive, after receiving the radio resource congestion information (130), a congestion end indicator indicating that the number of radio resources left available for delivering unicast services to the mobile transceiver is above the radio resource congestion threshold.

**4.** The apparatus (110) of claim 3, wherein the mobile transceiver is operable to avoid accessing any of the radio resources left available for delivering unicast services until the means (115) for receiving the radio resource congestion information (130) receives the congestion end indicator.

**5.** The apparatus (110) of claim 1, further comprising:
means for determining information on whether a priority of a unicast service is higher than a priority of the multicast service; and
means for controlling a data exchange between the mobile transceiver and the communication system based on a relation between a priority of the unicast service and a priority of the multicast service.

**6.** The apparatus (110) of claim 5, wherein the means for controlling the data exchange is operable to avoid occupying any of the radio resources left available for delivering unicast services, in case the priority of the multicast service has been determined to be higher than the priority of the unicast service.

**7.** The apparatus (110) of claim 5, wherein the means for controlling the data exchange is operable to uninterruptedly receive a multicast service the mobile transceiver has subscribed to, in case the priority of the multicast service has been determined to be higher than the priority of the unicast service.

**8.** The apparatus (110) of claim 7, wherein the means for controlling the data exchange is operable to uninterruptedly receive the multicast service even when the mobile transceiver is instructed to change from a RRC connected state to a RRC idle state, or vice versa.

**9.** The apparatus (110) of claim 5, further comprising:
means for receiving a paging information,
wherein the means for controlling the data exchange is operable to request at least radio resource of the number of radio resources left available for delivering unicast services for a RRC connection in response to the received paging information independent of whether the priority of the unicast service is higher or lower than the priority of the multicast service.

**10.** The apparatus (110) of claim 1, wherein the means (115) for receiving the radio resource congestion information (130) is operable to receive said radio resource congestion information (130) when the mobile terminal is in an idle mode of a Radio Resource Control (RRC) protocol.

**11.** The apparatus (110) of claim 1, wherein the set of radio resources is associated to a system carrier frequency of the communication system (100).

**12.** The apparatus (110) of claim 1 wherein the means (115) for receiving is operable to receive the radio resource congestion information (130) based on a mobile transceiver specific signaling from the communication system (100), or based on a radio cell specific signaling from the communication system (100).

**13.** An apparatus (120) for a base station transceiver of a communication system (100), the communication system (100) using a limited set of radio resources for delivering multicast and unicast services to associated mobile transceivers (110), the apparatus (120) comprising:
(125) transmitting, from the base station transceiver to an associated mobile transceiver (110), radio resource congestion information (130) indicating that a number of radio resources left available for delivering unicast services to the mobile transceiver is below a radio resource congestion threshold.

**14.** A method (600) for a communication system (100), wherein the communication system (100) has associated thereto a limited set of radio resources for delivering multicast and unicast services to associated mobile transceivers (110), the method (600) comprising:
providing (610) radio resource congestion information (130) to at least one of the associated mobile transceivers (110), wherein the radio resource congestion information indicates that a number of radio resources left available for delivering unicast services to the at least one associated mobile transceiver (110) is below a radio resource congestion threshold.

**15.** A computer program having a program code for performing the method of claim 14, when the computer program is executed on a computer or processor.
